(19) Europäisches Patentamt / European Patent Office / Office européen des brevets

(11) **EP 2 127 853 A1**

(12) **EUROPEAN PATENT APPLICATION**
published in accordance with Art. 153(4) EPC

(43) Date of publication:
**02.12.2009 Bulletin 2009/49**

(51) Int Cl.:
*B29C 59/02* (2006.01)      *G02B 3/00* (2006.01)
*G02B 5/18* (2006.01)      *G11B 7/22* (2006.01)

(21) Application number: **08703606.7**

(22) Date of filing: **22.01.2008**

(86) International application number:
**PCT/JP2008/050759**

(87) International publication number:
**WO 2008/117555 (02.10.2008 Gazette 2008/40)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.03.2007 JP 2007076951**

(71) Applicant: **Konica Minolta Opto, Inc.**
**Hachioji-shi, Tokyo 192-8505 (JP)**

(72) Inventor: **FUJIMOTO, Akihiro**
**Hachioji-shi**
**Tokyo 192-8505 (JP)**

(74) Representative: **Henkel, Feiler & Hänzel**
**Patentanwälte**
**Maximiliansplatz 21**
**80333 München (DE)**

(54) **OPTICAL ELEMENT AND METHOD FOR MACHINING DIE FOR OPTICAL ELEMENT**

(57)     An optical element having a phase structure on the optical surface formed of a plurality of optical function faces divided through level difference portions. The sculpture height of the level difference portion is set lower than that of the optical function face. Thus, precision of profile is prevented from falling due to prolongation of production time.

# FIG. 3

## Description

### FIELD OF THE INVENTION

The present invention relates to an optical element and method for machining a die for an optical element.

### BACKGROUND ART

In recent years, a high-precision optical element such as an objective lens for an optical pickup device is produced in such a way that a diffraction surface is formed on the optical surface, and the optical characteristics are improved by the diffraction effect of this structure. In this case, the diffraction structure is generally arranged in a grooved structure. When plastics are used as materials to form an optical element by injection molding and other methods, a subtle groove must be formed on the die. When a groove is formed for this die, an NC machine is sometimes used, for example, as shown in the Patent Literature 1. A fly cutting method or shaping method is used when machining the die with the NC machine.

In both the fly cutting method and shaping method, the die surface is machined at a predetermined pitch. Accordingly, a microscopically roughened structure is formed as cutting indentations (sculp) on the surface after machining. A difference in the height of the microscopically roughened structure forms the sculpture height of the optical element surface.

In one of the proposals having been made so far, when the sculpture height is equal to or greater than a predetermined height, the pitch in the cutting die is reduced, whereby the sculpture height is reduced, in the conventional method. Alternatively, the surface of the optical element is coated with another material, whereby the sculpture height is made less conspicuous.

Patent Literature 1: Japanese Unexamined Patent Application Publication No. Hei 11-248906

### DISCLOSURE OF THE INVENTION

### PROBLEMS TO BE SOLVED BY THE INVENTION

Incidentally, in the coating method, a coating process is added, and this prolongs the production time. Further, the equipment for ensuring uniform coating is expensive and the coated thickness reaches 0.2 $\mu$m. Thus, this method is not applicable to a structure on the order of submicrons.

In the meantime, when the method for reducing the pitch at the time of cutting is utilized, the existing equipment can be used and the need of a coating step can be eliminated. Thus, this method is applicable to the structure on the order of submicrons. However, since the pitch is reduced, the machining distance is increased, hence the production time is prolonged. If the production time is prolonged, the workpiece will be subjected to changes in temperature and humidity for a long period of time during the machining operation, and a misalignment will occur at the contact point of the cutting tool and die, with the result that the precision of the profile will deteriorate.

The object of the present invention is to provide cutting differences between the portion of the optical surface making a greater contribution to improvements in efficiency and other portions in such a way that the processing time is reduced and the precision of the profile is improved, whereby the total efficiency is maintained at a maximum.

### MEANS FOR SOLVING THE PROBLEMS

The first structure is an optical element having a phase structure provided on an optical surface of the optical element, the phase structure being formed of a plurality of optical function surfaces divided through a plurality of stepped portions, wherein each sculpture height of the plurality of stepped portions is set smaller than each sculpture height of the plurality of the optical function surfaces.

The second structure is the optical element described in Claim 1 wherein the each sculpture height of the optical function surfaces is 50 nm or more without exceeding 300 nm and that the each sculpture height of the plurality of stepped portions is 5 nm or more and less than 50 nm.

The third structure is an optical element having a phase structure provided on an optical surface of the optical element, the phase structure being formed of a plurality of optical function surfaces divided through a plurality of stepped portions, wherein each sculpture height on a periphery of the optical surface is set smaller than a sculpture height at a center of the optical surface.

The fourth structure is the optical element described in Claim 3 wherein the sculpture height at the center of the optical surface is 50 nm or more without exceeding 300 nm and the each sculpture height on the periphery is 5 nm or more and less than 50 nm.

The fifth structure is an optical element having a phase structure provided on an optical surface of the optical element, the phase structure being formed of a plurality of optical function surfaces divided through a plurality of stepped portions, wherein a sculp pitch on the plurality of optical function surfaces is smaller than a sculp pitch on the plurality of stepped portions.

The sixth structure is the optical element described in Claim 5 wherein the sculp pitch on the optical function surfaces is set in such a way that each sculpture height of the optical function surfaces will be 50 nm or more without exceeding 300 nm, and the sculp pitch on the plurality of stepped portions is set in such a way that each sculpture height of the plurality of stepped portions will be 5 nm or more and less than 50 nm.

The seventh structure is an optical element having a phase structure provided on an optical surface of the optical element, the phase structure being formed of a plurality of optical function surfaces divided through a plurality of stepped portions, wherein a sculp pitch on the periphery of the optical surface is set smaller than a sculp pitch at a center of the optical surface.

The eighth structure is the optical element described in Claim 7 wherein the sculp pitch at the center of the optical surface is set in such a way that a sculpture height at the center of the optical surface is 50 nm or more without exceeding 300 nm, and the sculp pitch on the periphery of the optical surface is set in such a way that a sculpture height on the periphery of the optical surface is 5 nm or more and less than 50 nm.

The ninth structure is the optical element described in any one of the Claims 3, 4, 7 and 8 wherein the periphery of the optical surface is an area ranging from the edge of a concentric circle having a diameter two thirds of an effective diameter of the optical surface to the effective diameter, and an angle between a normal line with respect to an optical axis of the optical element and the tangential line to the optical surface in the area is equal to or greater than 20 degrees.

The tenth structure is a method for machining a die for an optical element used to mold an optical element having a phase structure provided on an optical surface of the optical element, the phase structure being formed of a plurality of optical function surfaces divided through a plurality of stepped portions, wherein a cutting condition for cutting portions corresponding to the plurality of stepped portions with respect to a base material of the die is different from a cutting condition for cutting portions corresponding to the optical function surfaces with respect to the base material of the die.

The eleventh structure is the method for machining a die for an optical element described in Claim 10, wherein the cutting condition is a cutting feed pitch of a cutting tool with respect to the base material of the die.

The twelfth structure is the method for machining dies for an optical element described in Claim 11, wherein the cutting feed pitch for cutting the portion corresponding to the plurality of stepped portions is smaller than the cutting feed pitch for cutting the portions corresponding to the optical function surfaces.

The thirteenth structure is the method for machining a die for an optical element described in Claim 12, wherein the cutting feed pitch for cutting the portions corresponding to the optical function surfaces is set in such a way that each sculpture height of the optical function surfaces is 50 nm or more without exceeding 300 nm, and the cutting feed pitch for cutting the portions corresponding to the plurality of stepped portions is set in such a way that each sculpture height of the plurality of stepped portions is 5 nm or more and less than 50 nm.

The fourteenth structure is the method for machining a die for an optical element described in Claim 10, wherein the cutting condition is a radius of a tip end of a cutting tool.

The fifteenth structure is a method for machining a die for an optical element used to mold an optical element having a phase structure provide on the optical surface of the optical element, the phase structure being formed of a plurality of optical function surfaces divided through a plurality of stepped portions, wherein a cutting condition for cutting a center portion corresponding to a center of the optical surface with respect to a base material of the die is different from a cutting condition for cutting a periphery portion corresponding to the periphery of the optical surface with respect to the base material of the die.

The sixteenth structure is the method for an optical element described in Claim 15, wherein the cutting condition is a cutting feed pitch of a cutting tool with respect to the base material of the die.

The seventeenth structure is the method for machining a die for an optical element described in Claim 16, wherein the cutting feed pitch for cutting the center portion corresponding to the center of the optical surface is smaller than the cutting feed pitch for cutting the periphery portion corresponding to the periphery.

The eighteenth structure is the method for machining a die for an optical element described in Claim 12, wherein the cutting feed pitch for cutting the portion corresponding to the center is set in such a way that the sculpture height at the center is 50 nm or more without exceeding 300 nm, and the cutting feed pitch for cutting the portion corresponding to the periphery is set in such a way that the sculpture height on the periphery is 5 nm or more and less than 50 nm.

The nineteenth structure is the method for machining a die for an optical element described in Claim 15, wherein the cutting condition is a radius of a tip end of a cutting tool.

The twentieth structure is the method for machining a die for an optical element described in any one of the Claims 15 through 19, wherein the periphery portion is an area ranging from the edge of a concentric circle having a diameter two thirds of an effective diameter of the optical surface to the effective diameter, and an angle between a normal line with respect to an optical axis of the optical element and the tangential line to the optical surface in the area is equal to or greater than 20 degrees.

The twenty-first structure is the method for machining a die for an optical element described in any one of the Claims 10 through 20, wherein a fly cutting method is used to cut the base material of the die.

## EFFECTS OF THE INVENTION

According to the present invention, the sculpture height is reduced only on the face (the center of the optical surface and stepped portion) making a greater contribution to the improvement in the efficiency of using light. This arrangement reduces the cutting distance at the time of producing the optical element die as compared to the case wherein the sculpture heights of all the faces are uniform, hence reduces prolongation of the production time. Thus, profile precision is prevented from deteriorating due to a prolonged production time.

The sculpture height is formed smaller on the face making a greater contribution to the improvement in the efficiency of using light. This structure ensures the maximum light usage efficiency of the entire optical element.

## BRIEF DESCRIPTION OF THE DRAWINGS

Fig. 1 is a conceptual diagram representing the schematic configuration of the optical element of the present embodiment, wherein (a) is a front view and (b) is a side view;

Fig. 2 is an enlarged view inside the circle S of Fig. 1 (b);

Fig. 3 is a enlarged view of the cross section perpendicular to the scanning direction of a cutting tool, representing the profile of the surface having been machined in a pick-feed mode according to the fly cutting or shaping method using a cutting tool;

Fig. 4 is an explanatory diagram representing the schematic configuration of a machine used to implement the method of machining the die for an optical element in the present invention;

Fig. 5 is an explanatory diagram representing the schematic configuration of the cutting tool provided on the machine of Fig. 4, wherein (a) is a front view, (b) is a side view and (c) is an enlarged view of the circle S3 of (b);

Fig. 6 is an explanatory diagram representing a variation of the machine shown in Fig. 4; and

Fig. 7 is an explanatory diagram representing the center and periphery of the optical element, wherein (a) is a front view and (b) is a side view.

## DESCRIPTION OF REFERENCE NUMERALS

1. Optical element
2. Optical face
21. Diffraction grating
22. Level difference portion
23. Optical function face
24 and 25. Scalp
26. Effective diameter
27. Concentric circle
28. Optical axis
29. Normal line to optical axis
30. Tangential line
31. Periphery
32. Center
100. Machine
101. Base material for die
102. Chuck
103. X-Y table
104. Cutting tool
105. Drive table

**BEST MODE FOR CARRYING OUT THE INVENTION**

The following describes the embodiments of the present invention with reference to the drawings.

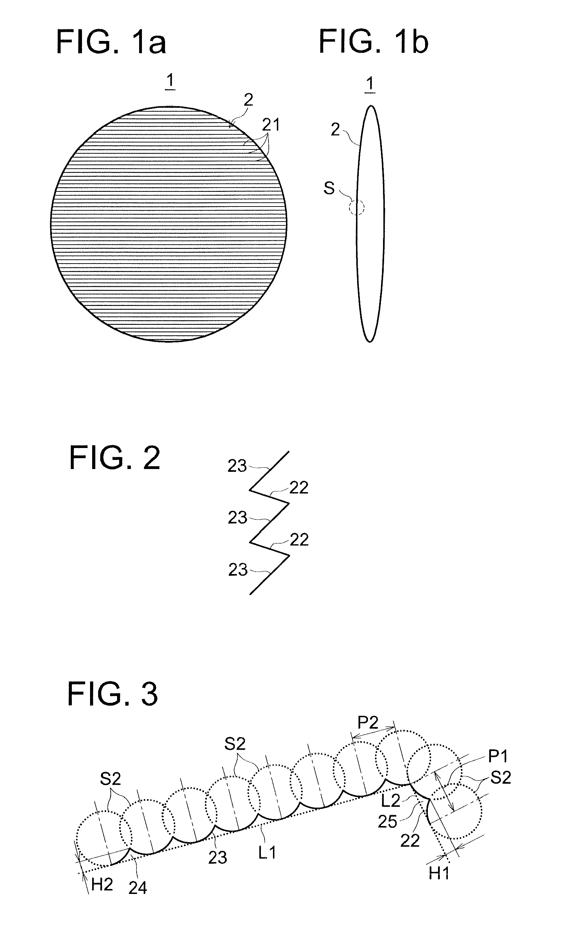

In the first place, the optical element of the present invention will be described. Fig. 1 is a conceptual diagram representing the schematic configuration of the optical element 1, wherein (a) is a front view and (b) is a side view.

The "optical element" is exemplified by a lens, prism, diffraction grating optical element (including a diffraction lens, diffraction prism, phase filter, chromatic aberration, and correction element), optical filter (including a space low-pass filter, wavelength band pass filter, wavelength low-pass filter, and wavelength by-pass filter), and polarizing filter (including an analyzer, azimuth rotator, and polarizing/separation prism), without the optical element being restricted thereto. Further, the optical element can be one that separates light by transmission and converges light onto a different position, or one that separates light by reflection and converges light onto a different position.

As shown in Fig. 1, the optical element 1 is formed in a disk, and a plurality of diffraction gratings 21 running in one direction (lateral direction of Fig. 1) are formed on the optical surface 2 thereof. Fig. 2 is an enlarged view inside the circle S of Fig. 1 (b). As shown in Fig. 2, a plurality of optical function faces 23 divided through a stepped portion 22 are formed on the optical surface 2.

Fig. 3 is an enlarged view of the cross section perpendicular to the scanning direction of a cutting tool, representing the profile of the surface having been machined in a pick-feed mode according to the fly cutting or shaping method using a cutting tool. As shown in Fig. 3, a plurality of minute microscopically roughened structures are shaped on the stepped portion 22 and optical function face 23. These microscopically roughened structures represent sculps 24 and 25. They are formed by transferring the microscopically roughened structures on the surface of the die when the optical element 1 is molded. The height of the sculps 24 and 25 (height from the common tangential lines L1 and L2 of the circles S2 constituting the sculps 24 and 25) is called the sculpture height. The pitch of the sculps 24 and 25 (center-to-center distance of the circles S2 constituting the sculps 24 and 25) is called the sculp pitch.

The sculpture height H1 of the stepped portion 22 is formed smaller than the sculpture height H2 of the optical function face 23. To put it more specifically, the sculpture height H2 of the optical function face 23 is 50 nm or more without exceeding 300 nm, and the sculpture height H1 of the stepped portion 22 is 5 nm or more to less than 50 nm exclusively.

The sculpture height H1 can be made different from the sculpture height H2 when the diameters of the circles S2 are made different. If the diameters of the circles S2 are constant, the sculpture height H1 can be made different from the sculpture height H2 by making the sculp pitches different. In this case, the sculpture height H1 of the stepped portion 22 can be made smaller than the sculpture height H2 of the optical function face 23 by making the sculp pitch P1 of the stepped portion 22 smaller than the sculp pitch P2 of the optical function face 23. Further, it is preferred in this case that the sculp pitch P2 of the optical function face 23 should be set in such a way that the sculpture height H2 of the optical function face 23 is 50 nm or more without exceeding 300 nm, and the sculp pitch P1 of the stepped portion 22 should be set in such a way that the sculpture height H1 of the stepped portion 22 is 5 nm or more to less than 50 nm exclusively.

If the sculpture heights H1 and H2 exceed the aforementioned upper limit, high-order diffracted light beam and flare in the relevant optical element 1 may be subjected to deterioration in optical performance in addition to deterioration in efficiency.

If the sculpture heights H1 and H2 are below the aforementioned lower limit, there will be a huge increase in the number of cuttings (the number of cutting lines) in the pick-feed mode, and the machining time will be unrealistic.

The following describes the method of machining the die for the optical element in order to mold the optical element 1.

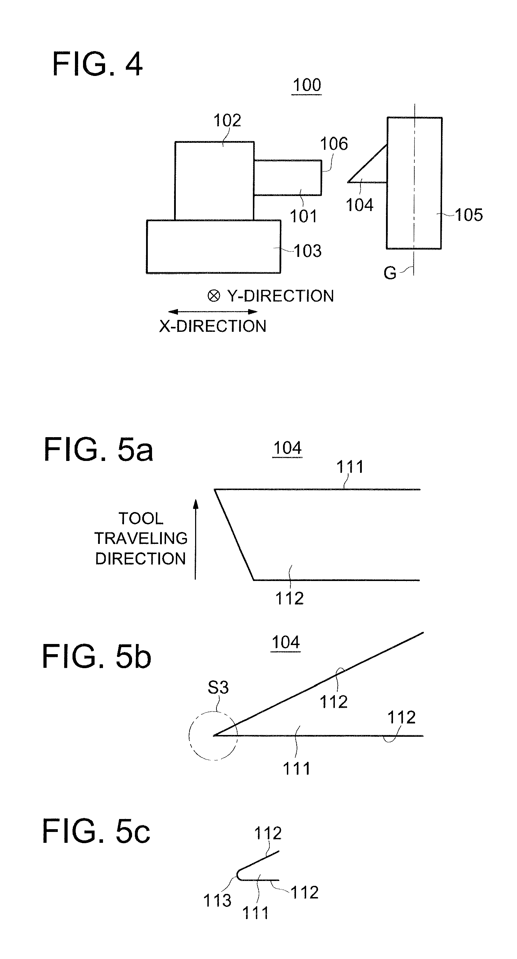

In the first place, the machine used to implement the method of machining the die for the optical element will be described. Fig. 4 is an explanatory diagram representing the schematic configuration of the machine. The machine 100 is a fly-cutting machine. As shown in Fig. 4, the machine 100 is provided with a chuck 102 for holding the base material for the die 101, an X-Y table 103 for supporting the chuck 102 movable in the horizontal direction, and an elevating drive table 105 for rotatably holding the cutting tool 104.

The X-Y table 103 is designed in such a way that the chuck 102 is moved in the direction (the lateral direction in the drawing: X-direction) wherein the base material for the die 101 is connected and disconnected from the cutting tool 104 and the direction (Y-direction) horizontally perpendicular to the X-direction.

The drive table 105 allows a groove to be formed on the machined surface 106 of the base material for the die 101 by rotating the cutting tool 104.

To put it more specifically, the chuck 102 is moved in the X-direction in such a way that the machined surface 106 of the base material for the die 101 is brought in contact with the cutting tool 104 when the drive table 105 has rotated the cutting tool 104. This movement ensures that the machined surface 106 of the base material for the die 101 will be cut by the cutting tool 104. If the chuck 102 is moved in the Y-direction when the cutting operation is maintained, the machined surface 106 is cut, and one groove line is formed in the Y-direction. When one groove line has been formed, the chuck 102 is moved in the X-direction in such a way that the machined surface 106 is removed from the cutting tool 104.

Then the drive table 105 is raised or lowered by a predetermined pitch. After that, the chuck 102 is moved in the X-direction in such a way that the machined surface 106 of the base material for the die 101 is brought in contact with the cutting tool 104, and the machined surface 106 of the base material for the die 101 is cut by the cutting tool 104. If the chuck 102 is moved in the Y-direction with the cutting operation being maintained, one groove line is formed on the machined surface 106. Repetition of this procedure allows the optical surface 2 of the optical element 1 to be formed on the machined surface 106 of the base material for the die 101.

The aforementioned sculps 24 and 25 of the optical element 1 are formed by the groove formed on the machined surface 106 of the base material for the die 101 by the cutting tool 104. The cutting conditions for cutting the stepped portion that corresponds to the stepped portion 22 with respect to the base material for the die 101 is different from the optical function face portion that corresponds to the optical function face 23 with respect to the base material for the die 101 in such a way that the sculpture height H1 of the stepped portion 22 in the optical element 1 and the sculpture height H1 of the optical function face 23 will have the aforementioned set values.

The cutting conditions are exemplified by the cutting feed pitch of the cutting tool with respect to the base material for the die 101 and the tip radius of the cutting tool.

When the cutting condition is to be changed by making the cutting feed pitch different, the cutting feed pitch corresponding to cutting the stepped portion is set smaller than the cutting feed pitch corresponding to cutting the optical function face portion. To put it more specifically, the cutting feed pitch corresponds to the sculp pitch. Accordingly, the cutting feed pitch for cutting the corresponding optical function face portion is set in such a way that the sculpture height of the optical function face is 50 nm or more without exceeding 300 nm, and the cutting feed pitch for cutting the corresponding stepped portion is set in such a way that the sculpture height of the stepped portion is 5 nm or more to less than 50 nm exclusively.

In the case of a fly-cutting machine 100, the cutting feed pitch can be classified into line feed pitch and main feed pitch. The line feed pitch is the pitch based on the vertical movement of the drive table 105. The main feed pitch is the pitch based on the movement of the chuck 102 in the Y-direction. Both of these pitches are set to meet the aforementioned conditions.

In the case of line feed pitch, for example, assume that the tool tip radius is "r" (nm), and the elevation pitch of the drive table 105 (the aforementioned predetermined pitch) is "fp" (nm). Then, the tool tip radius and elevation pitch is determined so as to meet the Formula (1).

$$5\,(nm) \leq r - (r^2 - (fp/2)^2)^{1/2} \leq 50\,(nm) \ \ldots \ (1)$$

In the Formula (1), the tool tip radius is preferably further **characterized in that** one third of the microscopically small structure or less is kept within the range of 10 nm or more without exceeding 1 $\mu$m. The microscopically small structure in the sense in which it is used here refers to the length of one stepped portion 22, for example.

In the meantime, for the main feed pitch, assume that the tool swing radius is "R" (nm), the feed rate of the chuck 102 is "f" (nm/s), and the tool rotation speed is "M" (rps). Then, for the main feed pitch sp, the tool swing radius, feed rate, and tool rotation speed are determined so as to meet the following Formulas (2) and (3).

$$sp = f/M \ \ldots \ (2)$$

$$50\,(nm) < R - (R^2 - (sp/2)^2)^{1/2} \leq 300\,(nm) \ \ldots \ (3)$$

In Formulas (2) and (3), the tool rotation speed is preferably kept in the range of 150 rps or more without exceeding 650 rps.

To put it more specifically, in the present embodiment, numerical values were substituted into the Formulas (1), (2), and (3) on the assumption that the tool tip radius r is 100 nm, the tool rotation speed M is 170 rps, and the tool swing radius R is 15,000,000 nm, whereby the feed rate f and elevation pitch fp best suited to each of the corresponding stepped portions and the corresponding optical function face portion were obtained. In this embodiment, the feed rate f at the corresponding stepped portion is 5,000,000 nm/s, the elevation pitch fp is 150 nm, the feed rate f of the optical function face is 20,000,000 nm, and the elevation pitch fp is 200 nm.

When the cutting condition is changed by making the tool tip radius of the cutting tool 104 different, in the meantime, changes are preferably made within the range of 10 nm or more without exceeding 1 μm, as described above.

Fig. 5 is an explanatory diagram representing the schematic configuration of the cutting tool 104, wherein (a) is a front view, (b) is a side view and (c) is an enlarged view of the circle S3 of (b). The front face of the cutting tool 104 in a tool traveling direction is a tooth face 111, and the face adjacent to the tooth face 111 is a flank 112. The aforementioned tool tip radius is the radius on the tip portion 113 of the tooth face 111. It is preferred that the tip angle of the tooth face 111 should be between one to five degrees smaller than the smallest of the angles formed by the stepped portion 22 of the optical element 1 and the optical function face 23. This arrangement will prevent the cutting operation from being subjected to geometric interference.

If the die produced under the aforementioned conditions is used to manufacture an optical element, the aforementioned optical element 1 will be molded. In the case of the aforementioned optical element 1, the sculpture height is formed smaller only on the stepped portion 22 thus making a greater contribution to the improvement in the efficiency of using light. This arrangement reduces the cutting distance in producing the die for the optical element 1, as compared to the case wherein the sculpture heights of all faces are made uniform, and therefore, reduces prolongation of the production time. Thus, precision of the profile is prevented from deteriorating due to a prolonged production time.

Further, since the sculpture height is formed smaller only on the stepped portion 22 thus making a greater contribution to the improvement in the efficiency of using light, the light usage efficiency of the entire optical element is improved on a high level.

It goes without saying that the present invention can be modified as appropriate, without being restricted to the aforementioned embodiment.

For example, the present embodiment has been described with reference to the case of producing a die for an optical element, using a machine 100 wherein the angle of the cutting tool 104 is fixed. However, the angle of the cutting tool 104 can be changed. To put it more specifically, the drive table 105 is provided with an angle changing shaft 121 capable of changing the angle of the cutting tool 104. This shaft permits the angle of the cutting tool 104 to be changed to a desired angle.

Further, a fly-cutting machine 100 was used as an example to describe the present embodiment. However, it is possible to use a shaping machine capable of cutting a groove by moving the machined surface 106 of the base material for the die 101 in the Y-direction, without the cutting tool 104 being rotated.

As compared to the machine wherein the angle of the cutting tool 104 can be changed, the fly-cutting machine illustrated in the present embodiment is preferably used because precise positioning of the tip of the cutting tool 104 can be achieved.

As compared to the shaping machine, the fly-cutting machine illustrated in the present embodiment is preferably characterized by a smaller load on the tool during the cutting operation, and a reduced amount of burrs produced.

Further, the present embodiment has been described with reference to the case wherein the sculpture height on the stepped portion 22 of the optical surface 2 is different from that on the optical function face 23 in the optical element 1. However, it is also possible to make such arrangements that the sculpture height at the center of the optical surface 2 is different from that on the periphery thereof.

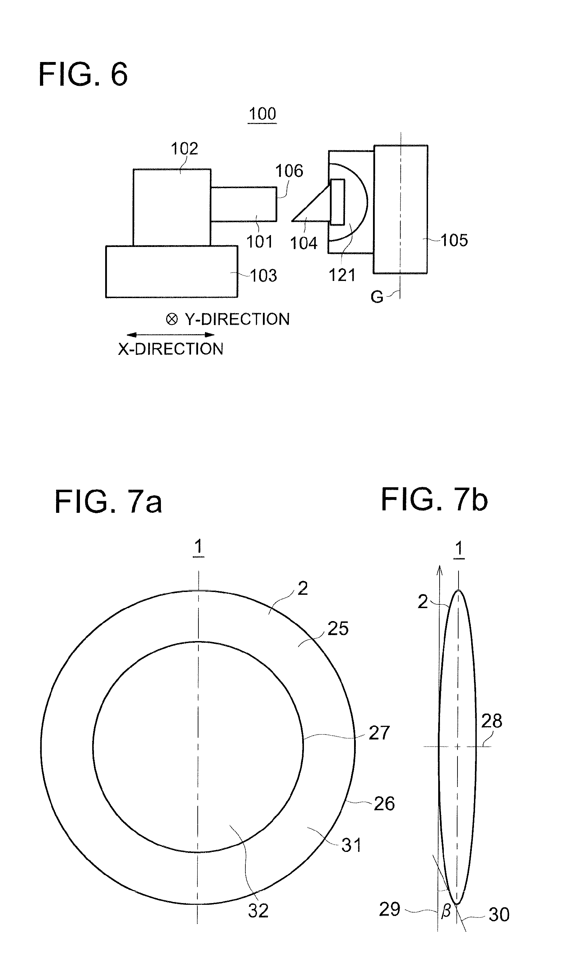

Fig. 7 is an explanatory diagram representing the center and periphery of the optical element, wherein (a) is a front view of the optical element and (b) is a side view of the optical element. As shown in Fig. 7, the periphery 31 of the optical surface 2 in the optical element 1 is the area ranging from the edge of the concentric circle 27 having a diameter equivalent to two thirds of the diameter of the effective diameter 26 of the optical surface 2 to the effective diameter 26. Further, the periphery 31 is the area wherein the angle β formed between the normal line 29 of the optical element 1 with respect to the optical axis 28 and the tangential line 30 to the optical surface 2 in the aforementioned area is 20 degrees or more. The center 32 is located inside the periphery 31.

The sculpture height on the periphery 31 of the optical surface 2 is formed smaller than the sculpture height of the center 32. To put it more specifically, the sculpture height of the center 32 of the optical surface 2 is 50 nm or more without exceeding 300 nm, and the sculpture height of the periphery 31 is 5 nm or more to less than 50 nm exclusively.

As described above, the sculpture pitch can be changed by making the sculpture pitches different. In this case, if the sculp pitch of the periphery 31 is formed smaller than the sculp pitch of the center 32, the sculpture height of the periphery 31 is formed smaller than the sculpture height of the center 32. Further, in this case, the sculp pitch of the center 32 is preferably set in such a way that the sculpture height of the center 32 is 50 nm or more without exceeding 300 nm. The sculp pitch of the periphery 31 is preferably set in such a way that the sculpture height of the periphery 31 is 5 nm or more to less than 50 nm exclusively.

When a die for the optical element is to be machined to mold such an optical element 1, the cutting condition for cutting the center section corresponding to the center 32 of the optical surface 2 with respect to the base material for the die 101 is made different from the cutting condition for cutting the periphery portion corresponding to the periphery 31 of the optical surface 2 with respect to the base material for the die 101.

If the cutting condition is the cutting feed pitch, the cutting feed pitch for cutting the corresponding center portion is set smaller than the cutting feed pitch for cutting the corresponding periphery portion. To put it more specifically, the cutting feed pitch for cutting the corresponding center portion is set in such a way that the sculpture height of the center 32 is 50 nm or more without exceeding 300 nm, and the cutting feed pitch for cutting the corresponding periphery portion is set in such a way that the sculpture height of the periphery 31 is 5 nm or more to less than 50 nm exclusively.

In this case, if the aforementioned fly-cutting machine 100 is used for cutting, the feed rate f and elevation pitch fp of the corresponding periphery portion and corresponding center portion can be obtained from Formulas (1), (2), and (3). To put it more specifically, in the present embodiment, numerical values were substituted into the Formulas on the assumption that the tool tip radius r is 100 nm, the tool rotation speed M is 170 rps, and the tool swing radius R is 15,000,000 nm, whereby the feed rate f and elevation pitch fp best suited to each of the corresponding periphery portion and corresponding center portion were obtained. In this embodiment, the feed rate f of the corresponding periphery portion is 5,000,000 nm/s, the elevation pitch fp is 150 nm, the feed rate f of the corresponding center portion is 20,000,000 nm, and the elevation pitch fp is 200 nm.

As described above, if the sculpture height of the periphery 31 of the optical surface 2 is set smaller than that of the center 32, the sculpture height is formed smaller only on the periphery 31 making a greater contribution to the improvement in the efficiency of using light. This arrangement reduces the cutting distance when producing the die for the optical element 1, as compared to the case wherein the sculpture heights of all the faces are made uniform, and therefore, reduces prolongation of the production time. Thus, precision of the profile is prevented from deteriorating due to a prolonged production time.

The sculpture height is formed smaller on the face making a greater contribution to the improvement in the efficiency of using light. This structure ensures maximum light usage efficiency of the entire optical element.

**Claims**

1. An optical element having a phase structure provided on an optical surface of the optical element, the phase structure being formed of a plurality of optical function surfaces divided through a plurality of stepped portions, wherein each sculpture height of the plurality of stepped portions is set smaller than each sculpture height of the plurality of the optical function surfaces.

2. The optical element described in Claim 1 wherein the each sculpture height of the optical function surfaces is 50 nm or more without exceeding 300 nm and the each sculpture height of the plurality of stepped portions is 5 nm or more and less than 50 nm.

3. An optical element having a phase structure provided on an optical surface of the optical element, the phase structure being formed of a plurality of optical function surfaces divided through a plurality of stepped portions, wherein each sculpture height on a periphery of the optical surface is set smaller than a sculpture height at a center of the optical surface.

4. The optical element described in Claim 3 wherein the sculpture height at the center of the optical surface is 50 nm or more without exceeding 300 nm and the each sculpture height on the periphery is 5 nm or more and less than 50 nm.

5. An optical element having a phase structure provided on an optical surface of the optical element, the phase structure being formed of a plurality of optical function surfaces divided through a plurality of stepped portions, wherein a sculp pitch on the plurality of optical function surfaces is smaller than a sculp pitch on the plurality of stepped portions.

6. The optical element described in Claim 5 wherein the sculp pitch on the optical function surfaces is set in such a way that each sculpture height of the optical function surfaces will be 50 nm or more without exceeding 300 nm, and the sculp pitch on the plurality of stepped portions is set in such a way that each sculpture height of the plurality of stepped portions will be 5 nm or more and less than 50 nm.

7. An optical element having a phase structure provided on an optical surface of the optical element, the phase structure being formed of a plurality of optical function surfaces divided through a plurality of stepped portions, wherein a sculp pitch on the periphery of the optical surface is set smaller than a sculp pitch at a center of the optical surface.

8. The optical element described in Claim 7 wherein the sculp pitch at the center of the optical surface is set in such a way that a sculpture height at the center of the optical surface is 50 nm or more without exceeding 300 nm, and the sculp pitch on the periphery of the optical surface is set in such a way that a sculpture height on the periphery of the optical surface is 5 nm or more and less than 50 nm.

9. The optical element described in any one of the Claims 3, 4, 7 and 8 wherein the periphery of the optical surface is an area ranging from the edge of a concentric circle having a diameter two thirds of an effective diameter of the optical surface to the effective diameter, and an angle between a normal line with respect to an optical axis of the optical element and the tangential line to the optical surface in the area is equal to or greater than 20 degrees.

10. A method for machining a die for an optical element used to mold an optical element having a phase structure provided on an optical surface of the optical element, the phase structure being formed of a plurality of optical function surfaces divided through a plurality of stepped portions, wherein a cutting condition for cutting portions corresponding to the plurality of stepped portions with respect to a base material of the die is different from a cutting condition for cutting portions corresponding to the optical function surfaces with respect to the base material of the die.

11. The method for machining a die for an optical element described in Claim 10, wherein the cutting condition is a cutting feed pitch of a cutting tool with respect to the base material of the die.

12. The method for machining dies for an optical element described in Claim 11, wherein the cutting feed pitch for cutting the portion corresponding to the plurality of stepped portions is smaller than the cutting feed pitch for cutting the portions corresponding to the optical function surfaces.

13. The method for machining a die for an optical element described in Claim 12, wherein the cutting feed pitch for cutting the portions corresponding to the optical function surfaces is set in such a way that each sculpture height of the optical function surfaces is 50 nm or more without exceeding 300 nm, and the cutting feed pitch for cutting the portions corresponding to the plurality of stepped portions is set in such a way that each sculpture height of the plurality of stepped portions is 5 nm or more and less than 50 nm.

14. The method for machining a die for an optical element described in Claim 10, wherein the cutting condition is a radius of a tip end of a cutting tool.

15. A method for machining a die for an optical element used to mold an optical element having a phase structure provide on the optical surface of the optical element, the phase structure being formed of a plurality of optical function surfaces divided through a plurality of stepped portions, wherein a cutting condition for cutting a center portion corresponding to a center of the optical surface with respect to a base material of the die is different from a cutting condition for cutting a periphery portion corresponding to the periphery of the optical surface with respect to the base material of the die.

16. The method for machining a die for an optical element described in Claim 15, wherein the cutting condition is a cutting feed pitch of a cutting tool with respect to the base material of the die.

17. The method for machining a die for an optical element described in Claim 16, wherein the cutting feed pitch for cutting the center portion corresponding to the center of the optical surface is smaller than the cutting feed pitch for cutting the periphery portion corresponding to the periphery.

18. The method for machining a die for an optical element described in Claim 12, wherein the cutting feed pitch for cutting the portion corresponding to the center is set in such a way that the sculpture height at the center is 50 nm or more without exceeding 300 nm, and the cutting feed pitch for cutting the portion corresponding to the periphery is set in such a way that the sculpture height on the periphery is 5 nm or more and less than 50 nm.

19. The method for machining a die for an optical element described in Claim 15, wherein the cutting condition is a radius of a tip end of a cutting tool.

20. The method for machining a die for an optical element described in any one of the Claims 15 through 19, wherein the periphery portion is an area ranging from the edge of a concentric circle having a diameter two thirds of an effective diameter of the optical surface to the effective diameter, and an angle between a normal line with respect to an optical axis of the optical element and the tangential line to the optical surface in the area is equal to or greater than 20 degrees.

21. The method for machining a die for an optical element described in any one of the Claims 10 through 20, wherein a fly cutting method is used to cut the base material of the die.

# FIG. 1a

<u>1</u>

2

21

# FIG. 1b

<u>1</u>

2

S

# FIG. 2

23

22

23

22

23

# FIG. 3

P2

S2

S2

P1

S2

L2

25

22

23

L1

H1

H2 24

# FIG. 4

⊗ Y-DIRECTION

X-DIRECTION

# FIG. 5a

TOOL
TRAVELING
DIRECTION

# FIG. 5b

# FIG. 5c

# FIG. 6

⊗ Y-DIRECTION

←→ X-DIRECTION

# FIG. 7a

# FIG. 7b

<table>
<tr><td colspan="2" style="text-align:center"><b>INTERNATIONAL SEARCH REPORT</b></td><td>International application No.<br>PCT/JP2008/050759</td></tr>
</table>

| | |
|---|---|
| A. CLASSIFICATION OF SUBJECT MATTER<br>*B29C59/02*(2006.01)i, *G02B3/00*(2006.01)i, *G02B5/18*(2006.01)i, *G11B7/22*<br>(2006.01)i | |

According to International Patent Classification (IPC) or to both national classification and IPC

**B. FIELDS SEARCHED**

Minimum documentation searched (classification system followed by classification symbols)
B29C59/02, G02B3/00, G02B5/18, G11B7/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2004-21077 A (Nikon Corp.),<br>22 January, 2004 (22.01.04),<br>Claims; Par. Nos. [0003], [0006], [0018] to<br>[0023], [0026] to [0029], [0036] to [0044];<br>Figs. 2, 8<br>(Family: none) | 1,10,14,15,<br>19-21<br>2-9,11-13,<br>16-18 |
| Y | JP 11-167013 A (Matsushita Electric Industrial<br>Co., Ltd.),<br>22 June, 1999 (22.06.99),<br>Par. Nos. [0001], [0007] to [0014], [0052] to<br>[0055], [0141] to [0146]; Figs. 11 to 13<br>& US 2002-0196428 A1　& EP 000905531 A2 | 2-9,11-13,<br>16-18 |

☒ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 March, 2008 (10.03.08) | Date of mailing of the international search report<br>18 March, 2008 (18.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/050759 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-99375 A  (Sankyo Seiki Mfg. Co., Ltd.),<br>14 April, 2005 (14.04.05),<br>Full text; all drawings<br>& US 2005-0025423 A1 | 1-21 |
| A | JP 11-197902 A  (Canon Inc.),<br>27 July, 1999 (27.07.99),<br>Full text; all drawings<br>(Family: none) | 1-21 |
| A | JP 2004-344994 A  (Sankyo Seiki Mfg. Co., Ltd.),<br>09 December, 2004 (09.12.04),<br>Full text; all drawings<br>& US 2005-0008889 A1 | 1-21 |

Form PCT/ISA/210 (continuation of second sheet) (April 2007)

**EP 2 127 853 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI11248906 B